# EUROPEAN PATENT APPLICATION

(11) **EP 4 734 561 A1**
(43) Date of publication of application: **29.04.2026**
(21) Application number: 23941952.6
(22) Date of filing: 21.06.2023
(51) Int. Cl.: H04W 4/024

(54) **INFORMATION INDICATION METHOD, TERMINAL, NETWORK DEVICE, COMMUNICATION SYSTEM AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2023/101860
(87) International publication number: WO 2024/259662

(57) **Abstract**

The embodiments of the present disclosure relate to an information indication method, a terminal, a network device, a communication system and a storage medium. The method comprises: sending first information, wherein the first information is used for indicating a measurement result of a terminal executing global navigation satellite system (GNSS) measurement within a GNSS measurement gap, and the measurement result comprises the result of successfully executing GNSS measurement or the result of unsuccessfully executing GNSS measurement. Thus, information of a GNSS measurement result can be obtained by a network.

## Description

### FIELD

The present disclosure relates to the field of wireless communication technology, and in particular relates to an information indication method, a terminal, a network device, a communication system and a storage medium.

### BACKGROUND

With the development of wireless communication technology, satellite communication technology has been introduced. A terminal needs to obtain position information to determine timing compensation information for an uplink transmission. The terminal may determine its own position information through a global navigation satellite system (GNSS) measurement module.

### SUMMARY

In the related art, a network may not obtain GNSS measurement result information of a terminal.

Embodiments of the present disclosure provide an information indication method, a terminal, a network device, a communication system and a storage medium.

Embodiments of the present disclosure provide an information indication method, a terminal, a network device, a communication system and a storage medium.

According to a first aspect of embodiments of the present disclosure, there is provided an information indication method, including:
sending first information,
in which the first information indicates a measurement result of a global navigation satellite system (GNSS) measurement performed by a terminal within a GNSS measurement gap, and the measurement result includes whether the GNSS measurement is successful or failed.

According to a second aspect of embodiments of the present disclosure, there is provided an information indication method, including:
receiving first information,
in which the first information indicates a measurement result of a global navigation satellite system (GNSS) measurement performed by a terminal within a GNSS measurement gap, and the measurement result includes whether the GNSS measurement is successful or failed.

According to a third aspect of embodiments of the present disclosure, there is provided an information indication method, applied to a communication system, including:
a terminal sending first information to a network device,
in which the first information indicates a measurement result of a global navigation satellite system (GNSS) measurement performed by a terminal within a GNSS measurement gap, and the measurement result includes whether the GNSS measurement is successful or failed.

According to a fourth aspect of embodiments of the present disclosure, there is provided a terminal, including:
a transceiver module configured to send first information,
in which the first information indicates a measurement result of a global navigation satellite system (GNSS) measurement performed by a terminal within a GNSS measurement gap, and the measurement result includes whether the GNSS measurement is successful or failed.

According to a fifth aspect of embodiments of the present disclosure, there is provided a network device, including:
a transceiver module configured to receive first information,
in which the first information indicates a measurement result of a global navigation satellite system (GNSS) measurement performed by a terminal within a GNSS measurement gap, and the measurement result includes whether the GNSS measurement is successful or failed.

According to a sixth aspect of embodiments of the present disclosure, there is provided a communication system, including: a terminal configured to implement the information indication method provided in the first aspect; and a network device configured to implement the information indication method provided in the second aspect.

According to a seventh aspect of embodiments of the present disclosure, there is provided a terminal, including:
one or more processors,
in which the terminal is configured to perform the information indication method described in the first aspect.

According to an eighth aspect of embodiments of the present disclosure, there is provided a network device, including:
one or more processors,
in which the network device is configured to perform the information indication method described in the second aspect.

According to a ninth aspect of embodiments of the present disclosure, there is provided a storage medium storing instructions that, when executed on a communication device, cause the communication device to perform the information indication method provided by the first aspect, the second aspect, or the third aspect.

The technical solution provided by embodiments of the present disclosure enables the network to obtain the GNSS measurement result information of the terminal.

It is to be understood that both the foregoing general description and the following detailed description are illustrative and explanatory only and are not restrictive of embodiments of the present disclosure.

### BRIEF DESCRIPTION OF THE DRAWINGS

In order to more clearly explain technical solutions in embodiments of the present disclosure, the drawings necessary for the description of embodiments are described below, and the following drawings are only some embodiments of the present disclosure, and do not specifically limit the scope of protection of the present disclosure.
FIG. 1a is a schematic diagram illustrating an architecture of a communication system according to an illustrative embodiment.
FIG. 1b is a schematic diagram illustrating alignment of uplink and downlink timing according to an illustrative embodiment.
FIG. 1c is a schematic diagram illustrating misalignment of uplink and downlink timing according to an illustrative embodiment.
FIG. 2a is a flow chart illustrating an information indication method according to an illustrative embodiment.
FIG. 2b is a schematic diagram illustrating a reporting time according to an illustrative embodiment.
FIG. 2c is a schematic diagram illustrating a reporting time according to an illustrative embodiment.
FIG. 3a is a flow chart illustrating an information indication method according to an illustrative embodiment.
FIG. 3b is a flow chart illustrating an information indication method according to an illustrative embodiment.
FIG. 4a is a flow chart illustrating an information indication method according to an illustrative embodiment.
FIG. 4b is a flow chart illustrating an information indication method according to an illustrative embodiment.
FIG. 5a is a flow chart illustrating an information indication method according to an illustrative embodiment.
FIG. 6a is a flow chart illustrating an information indication method according to an illustrative embodiment.
FIG. 7a is a block diagram illustrating a terminal according to an illustrative embodiment.
FIG. 7b is a block diagram illustrating a network device according to an illustrative embodiment.
FIG. 8a is a block diagram illustrating a user equipment (UE) according to an illustrative embodiment.
FIG. 8b is a block diagram illustrating a communication device according to an illustrative embodiment.

### DETAILED DESCRIPTION

Embodiments of the present disclosure provides an information indication method, a terminal, a network device, a communication system and a storage medium.

According to a first aspect of embodiments of the present disclosure, there is provided an information indication method, including:
sending first information,
in which the first information indicates a measurement result of a global navigation satellite system (GNSS) measurement performed by a terminal within a GNSS measurement gap, and the measurement result includes whether the GNSS measurement is successful or failed.

In the above-described embodiments, since the first information indicates the measurement result of the GNSS measurement performed by the terminal within the GNSS measurement gap, the network device may determine whether the GNSS measurement performed by the terminal is successful or failed as compared to a case where the measurement result may not be obtained, and may perform related scheduling according to the measurement result.

In connection with some embodiments of the first aspect, in some embodiments, the method further includes:
receiving second information; and
in a case where the second information is received, obtaining the measurement result by performing the GNSS measurement within the GNSS measurement gap.

In the above-described embodiments, after receiving the second information, the terminal may be triggered to perform the GNSS measurement within the GNSS measurement gap to obtain the measurement result.

In connection with some embodiments of the first aspect, in some embodiments, the method further includes at least one of:
determining the GNSS measurement gap according to third information received; or
determining the GNSS measurement gap according to third information predefined or preconfigured.

In the above-described embodiments, the GNSS measurement gap may be determined by the third information configured by the network, or the GNSS measurement gap may be determined according to the third information predefined or preconfigured, and the configuration mode for the GNSS measurement gap may be more flexible.

In connection with some embodiments of the first aspect, in some embodiments, the method further includes one of:
a start position of the GNSS measurement gap being an end position of a GNSS validity duration;
a start position of the GNSS measurement gap being a time domain position spaced from an end position of a GNSS validity duration by a first offset;
a start position of the GNSS measurement gap being a time domain position spaced from a hybrid automatic repeat request (HARQ) feedback position of the terminal by a second offset; or
a start position of the GNSS measurement gap being determined according to fourth information received.

In the above-described embodiments, the configuration for the start position may be more flexible.

In connection with some embodiments of the first aspect, in some embodiments, sending the first information includes at least one of:
in a case where the GNSS measurement is complete, sending the first information;
in a case where a GNSS available time is the same as a most recently reported GNSS available time, sending the first information; or
in a case where a deviation between a GNSS available time and a most recently reported GNSS available time is less than a first threshold, sending the first information.

In the above-described embodiments, there are various ways for sending the first information, and a timing for sending the first information may be more flexible.

In connection with some embodiments of the first aspect, in some embodiments, the method further includes at least one of:
in a case where the first information carries a first identifier, the first information indication that the GNSS measurement is successful;
in a case where the first information carries a second identifier, the first information indicating that the GNSS measurement is failed;
in a case where the first information carries a GNSS available time, the first information indicating that the GNSS measurement is successful;
in a case where the first information does not carry a GNSS available time, the first information indicating that the GNSS measurement is failed; or
in a case where a duration of a GNSS available time carried by the first information is less than a second threshold, the first information indicating that the GNSS measurement is failed.

In the above-described embodiments, indication content of the first information may be configured in various ways, and an indication mode is more flexible.

In connection with some embodiments of the first aspect, in some embodiments, in a case where a deviation between a GNSS available time and a most recently reported GNSS available time is greater than a first threshold, the first information carries the GNSS available time.

In the above-described embodiments, as described above, in a case where the GNSS available time is greatly different from the most recently reported GNSS available time, the GNSS available time may be carried to allow the network to know the change of the GNSS available time.

In connection with some embodiments of the first aspect, in some embodiments, the GNSS available time is a remaining GNSS available time.

In the above-described embodiments, the network may be informed of the remaining GNSS available time.

In connection with some embodiments of the first aspect, in some embodiments, the method further includes:
determining fifth information, in which the fifth information is used for the terminal to determine a sending time for sending the first information; and
sending the first information includes:
sending the first information according to the fifth information.

In the above-described embodiments, it is possible to send the first information at the sending time determined by the terminal.

In connection with some embodiments of the first aspect, in some embodiments, the fifth information is predefined or preconfigured.

In the above-described embodiments, the configuration for the fifth information is diverse, and the configuration for the fifth information is more flexible.

In connection with some embodiments of the first aspect, in some embodiments, the sending time is a time of the terminal spaced from an end position of the GNSS measurement gap by a first duration.

In the above-described embodiments, the sending time may be adjusted by the first duration, and the first duration may be adapted to a preparation time of the terminal.

In connection with some embodiments of the first aspect, in some embodiments, the sending time is a time within a first time period after the terminal successfully performs the GNSS measurement.

In the above-described embodiments, the terminal may send the first information by flexibly selecting the time within the first time period.

In connection with some embodiments of the first aspect, in some embodiments, sending the first information includes one of:
sending the first information via an uplink data channel; or
sending the first information via an uplink control channel.

In the above-described embodiments, the way for sending the first information is more flexible.

In connection with some embodiments of the first aspect, in some embodiments, the uplink control channel is a physical random access channel (PRACH), and the method further includes:
setting a first set, in which the first set includes at least one preamble; and
sending the PRACH by using the preamble in the first set, in which the first information indicates that the GNSS measurement is successful.

In the above-described embodiments, the preamble in the first set may implicitly indicate whether the GNSS measurement is successful, which may save signaling resources.

According to a second aspect of embodiments of the present disclosure, there is provided an information indication method, including:
receiving first information,
in which the first information indicates a measurement result of a global navigation satellite system (GNSS) measurement performed by a terminal within a GNSS measurement gap, and the measurement result includes whether the GNSS measurement is successful or failed.

In connection with some embodiments of the second aspect, in some embodiments, the method further includes:
sending second information, in which the second information is used to trigger the terminal to perform the GNSS measurement within the GNSS measurement gap.

In connection with some embodiments of the second aspect, in some embodiments, the method further includes one of:
a start position of the GNSS measurement gap being an end position of a GNSS validity duration;
a start position of the GNSS measurement gap being a time domain position spaced from an end position of a GNSS validity duration by a first offset;
a start position of the GNSS measurement gap being a time domain position spaced from a hybrid automatic repeat request (HARQ) feedback position of the terminal by a second offset; or
a start position of the GNSS measurement gap being determined according to fourth information received.

In connection with some embodiments of the second aspect, in some embodiments, the method further includes at least one of:
in a case where the first information carries a first identifier, the first information indicating that the GNSS measurement is successful;
in a case where the first information carries a second identifier, the first information indicating that the GNSS measurement is failed;
in a case where the first information carries a GNSS available time, the first information indicating that the GNSS measurement is successful;
in a case where the first information does not carry a GNSS available time, the first information indicating that the GNSS measurement is failed; or
in a case where a duration of a GNSS available time carried by the first information is less than a second threshold, the first information indicating that the GNSS measurement is failed.

In connection with some embodiments of the second aspect, in some embodiments, in a case where a deviation between a GNSS available time and a most recently reported GNSS available time is greater than a first threshold, the first information carries the GNSS available time.

In connection with some embodiments of the second aspect, in some embodiments, the GNSS available time is a remaining GNSS available time.

In connection with some embodiments of the second aspect, in some embodiments, a sending time of the first information is a time of the terminal spaced from an end position of the GNSS measurement gap by a first duration.

In connection with some embodiments of the second aspect, in some embodiments, a sending time of the first information is a time within a first time period after the terminal successfully performs the GNSS measurement.

In connection with some embodiments of the second aspect, in some embodiments, receiving the first information includes one of:
receiving the first information via an uplink data channel; or
receiving the first information via an uplink control channel.

In connection with some embodiments of the second aspect, in some embodiments, the uplink control channel is a physical random access channel (PRACH), and the method further includes:
receiving the PRACH sent by the terminal using a preamble in a first set, in which the first set includes at least one preamble, and the first information indicates that the GNSS measurement is successful.

According to a third aspect of embodiments of the present disclosure, there is provided an information indication method, applied to a communication system, including:
a terminal sending first information to a network device,
in which the first information indicates a measurement result of a global navigation satellite system (GNSS) measurement performed by a terminal within a GNSS measurement gap, and the measurement result includes whether the GNSS measurement is successful or failed.

According to a fourth aspect of embodiments of the present disclosure, there is provided a terminal, including:
a transceiver module configured to send first information,
in which the first information indicates a measurement result of a global navigation satellite system (GNSS) measurement performed by a terminal within a GNSS measurement gap, and the measurement result includes whether the GNSS measurement is successful or failed.

According to a fifth aspect of embodiments of the present disclosure, there is provided a network device, including:
a transceiver module configured to receive first information,
in which the first information indicates a measurement result of a global navigation satellite system (GNSS) measurement performed by a terminal within a GNSS measurement gap, and the measurement result includes whether the GNSS measurement is successful or failed.

According to a sixth aspect of embodiments of the present disclosure, there is provided a communication system, including: a terminal configured to implement the information indication method provided in the first aspect; and a network device configured to implement the information indication method provided in the second aspect.

According to a seventh aspect of embodiments of the present disclosure, there is provided a terminal, including:
one or more processors,
in which the terminal is configured to perform the information indication method described in the first aspect.

According to an eighth aspect of embodiments of the present disclosure, there is provided a network device, including:
one or more processors,
in which the network device is configured to perform the information indication method described in the second aspect.

According to a ninth aspect of embodiments of the present disclosure, there is provided a storage medium storing instructions that, when executed on a communication device, cause the communication device to perform the information indication method described in the first and second aspects, and optional implementations of the first and second aspects.

According to a tenth aspect of embodiments of the present disclosure, there is provided a program product that, when executed by a communication device, causes the communication device to perform the method described in optional implementations of the first and second aspects.

According to an eleventh aspect of embodiments of the present disclosure, there is provided a computer program that, when executed on a computer, causes the computer to perform the method described in optional implementations of the first and second aspects.

According to a twelfth aspect of embodiments of the present disclosure, there is provided a chip or a chip system. The chip or chip system includes a processing circuitry configured to perform the method described in optional implementations of the first and second aspects.

It may be understood that the above-described terminal, network device, communication system, storage medium, program product, computer program, chip, or chip system are all used to perform the method proposed in embodiments of the present disclosure. Therefore, for the beneficial effects that may be achieved, reference may be made to the beneficial effects in the corresponding methods, which is not repeated here.

Embodiments of the present disclosure provide an information indication method, a terminal, a network device, a communication system, and a storage medium. In some embodiments, terms such as an information indication method and an information processing method and an information transmission method may be replaced with each other, and terms such as a communication system and an information processing system may be replaced with each other.

Embodiments of the present disclosure are not exhaustive, but are merely illustrative of some embodiments, and are not intended to be a specific limitation on the scope of protection of the present disclosure. In the absence of contradictions, each step in a certain embodiment may be implemented as an independent embodiment, and the steps may be arbitrarily combined, for example, a solution in which some steps are removed in a certain embodiment may also be implemented as an independent embodiment, and the order of each step in a certain embodiment may be arbitrarily exchanged, and further, optional implementations in a certain embodiment may be arbitrarily combined. Furthermore, various embodiments may be arbitrarily combined, for example, some or all steps of different embodiments may be arbitrarily combined, and a certain embodiment may be arbitrarily combined with optional implementations of other embodiments.

In each embodiment of the present disclosure, if there is no special description and logical conflict, the terms and/or descriptions among the embodiments are consistent and may be referenced to each other, and technical features in different embodiments may be combined to form new embodiments according to their intrinsic logical relationships.

The terms used in embodiments of the present disclosure is for the purpose of describing specific embodiments only, and is not intended to limit the present disclosure.

In embodiments of the present disclosure, unless otherwise specified, elements represented in the singular form, such as "a", "an", "the", "above", "said", "preceding", "this", and the like, may represent "one and only one", or may represent "one or more", "at least one", and the like. For example, in a case where an article such as "a", "an", and "the", in English is used in translation, a noun after the article may be understood as a singular expression or a plural expression.

In embodiments of the present disclosure, "multiple" refers to two or more.

In some embodiments, terms such as "at least one of", "one or more", "a plurality of", "multiple", may be replaced with each other.

In some embodiments, descriptions such as "at least one of A and B", "A and/or B", "A in one case and B in another", "in response to one case A and in response to another case B" may include the following technical solutions depending on the situation: in some embodiments A (A is executed regardless of B); in some embodiments B (B is executed regardless of A); in some embodiments, execution is selected from A and B (A and B are selectively executed); in some embodiments A and B (both A and B are executed). The same applies when there are more branches such as A, B, and C.

In some embodiments, descriptions such as "A or B" may include the following technical solutions depending on the situation: in some embodiments, A (A is executed regardless of B); in some embodiments, B (B is executed regardless of A); in some embodiments, execution is selected from A and B (A and B are selectively executed). The same applies when there are more branches such as A, B, and C.

The prefix words such as "first" and "second" in embodiments of the present disclosure are only for distinguishing different description objects, and do not constitute restrictions on the position, order, priority, quantity, content, etc. of the description objects. For statements of the description objects, please refer to the description of the context in the claims or the embodiments, and should not constitute unnecessary restrictions due to the use of the prefix words. For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "rank". For another example, the number of description objects is not limited by ordinal numbers, and may be one or more. Taking "first device" as an example, the number of "devices" may be one or more. Furthermore, objects modified by different prefixes may be the same or different, for example, if the description object is the "device", the "first device" and the "second device" may be the same device or different devices, and the types thereof may be the same or different. For another example, when the description object is "information", the "first information" and the "second information" may be the same information or different information, and the contents thereof may be the same or different.

In some embodiments, terms such as "including A", "containing A", "for indicating A", "carrying A", may be interpreted as directly carrying A, or may be interpreted as indirectly indicating A.

In some embodiments, terms such as "in response to", "in response to determining", "in a case where", "when", "upon", "if", and the like may be replaced with each other.

In some embodiments, terms such as "greater than", "greater than or equal to", "not smaller than", "more than", "more than or equal to", "not lower than", "higher", "higher than or equal to", "not less than", "above" and the like may be replaced with each other, and terms such as "smaller than", "smaller than or equal to", "not greater than", "less than", "less than or equal to", "not more than", "lower than", "lower than or equal to", "not higher than", "below" and the like may be replaced with each other.

In some embodiments, the apparatus and the device may be interpreted as physical or virtual, and the names thereof are not limited to those described in embodiments, and may be understood as "equipment", "device", "circuit", "network element", "node", "function", "unit", "section", "system", "network", "chip", "chip system", "entity", "body", and the like in some situations.

In some embodiments, the "network" may be interpreted as an apparatus included in the network, for example, an access network device, a core network device, or the like.

In some embodiments, the "access network device (AN device)" may also be referred to as "a radio access network device (RAN device)", "a base station (BS)", "a radio base station", "a fixed station", may also be understood in some embodiments as "a node", "an access point", "a transmission point (TP)", "a reception point (RP)", "a transmission/reception point (TRP)", "a panel", "an antenna panel", "an antenna array", "a cell", "a macro cell", "a small cell", "a femto cell", "a pico cell", "a sector", "a cell group", "a service cell", "a carrier", "a component carrier", "a bandwidth part (BWP)", etc.

In some embodiments, "a terminal" or "a terminal device" may be referred to as "a user equipment (UE)", "a user terminal", "a mobile station (MS)", "a mobile terminal (MT)", a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client and the like

In some embodiments, obtaining data, information and the like may comply with laws and regulations of the country where it is located.

In some embodiments, data, information and the like may be obtained after obtaining the user's consent.

Further, each element, each row, or each column in the table of embodiments of the present disclosure may be implemented as an independent embodiment, and any combination of any element, any row, or any column may also be implemented as an independent embodiment.

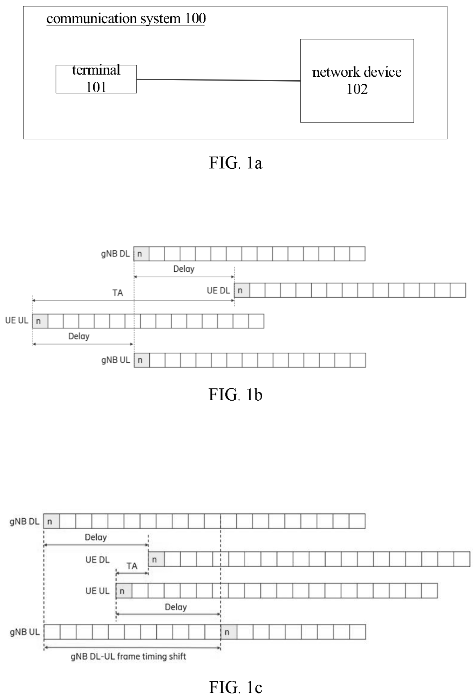

FIG. 1a is a schematic diagram illustrating an architecture of a communication system according to an illustrative embodiment.

As shown in FIG. 1a, the communication system 100 may include a terminal 101 and a network device 102.

In some embodiments, the network device 102 may include at least one of an access network device and a core network device.

In some embodiments, the terminal 101 includes, for example, at least one of a mobile phone, a wearable device, an Internet of Things device, an automobile with a communication function, a smart car, a pad, a computer with a wireless transmission and reception function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home, which is not limited in the present disclosure

In some embodiments, the access network device 102 is, for example, a node or device that accesses a terminal to a wireless network, and the access network device may include at least one of an evolved NodeB (eNB), a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center, a base station in a 6G communication system, an open base station (RAN), a cloud base station (Cloud RAN), a base station in another communication system, and an access node in a wireless fidelity (WiFi) system, which is not limited in the present disclosure

In some embodiments, the technical solution of the present disclosure may be applied to an Open RAN architecture. Moreover, an interface between or within the access network device according to embodiments of the present disclosure may be changed to an internal interface of an Open RAN, and the flow and information interaction between the internal interfaces may be implemented by software or a program.

In some embodiments, the access network device may be composed of a central unit (CU) and a distributed unit (DU), in which the CU may also be referred to as a control unit, and the protocol layer of the access network device may be separated by adopting the structure of the CU-DU, some functions of the protocol layer are centrally controlled by the CU, and some or all functions of the remaining protocol layer are distributed in the DU, and the DU is centrally controlled by the CU, but is not limited thereto.

In some embodiments, a core network device 103 may be one device including one or more network elements, or may be multiple devices or groups of devices including all or part of the above one or more network elements, respectively. The network element may be virtual or physical. The core network includes, for example, at least one of an evolved packet core (EPC), a 5G core network (5GCN), and a next generation core (NGC).

It may be understood that the communication system described in embodiments of the present disclosure is to more clearly explain the technical solution of embodiments of the present disclosure, and does not constitute a limitation on the technical solution provided by embodiments of the present disclosure. As those skilled in the art know, with the evolution of the system architecture and the emergence of new business scenarios, the technical solution provided by embodiments of the present disclosure is applicable to similar technical problems.

The following embodiments of the present disclosure may be applied to the communication system 100 illustrated in FIG. 1a or a part of the body, which is not limited in embodiments of the present disclosure. Each body shown in FIG. 1a is an example, and the communication system may include all or some of the bodies shown in FIG. 1a, or other bodies other than those shown in FIG. 1a, the number and form of the bodies are arbitrary, the connection relationship between the bodies is an example, and the bodies may not be connected or connected, and the connection may be any form, including direct connection or indirect connection, wired connection or wireless connection.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), and IEEE 802.20, ultra-wideband (UWB), Bluetooth (registered trademark), public land mobile network (PLMN) networks, device-to-device (D2D) systems, machine-to-machine (M2M) systems, Internet of Things (IoT) systems, vehicle-to-everything (V2X) systems, systems utilizing other communication methods, and next-generation systems built upon them and the like. Moreover, multiple systems may be combined (e.g., a combination of LTE or LTE-A with 5G) for application.

The continuous emergence of new Internet applications such as augmented reality (AR), virtual reality (VR) and vehicle-to-vehicle communication has put forward higher requirements for wireless communication technology, driving the continuous evolution of wireless communication technology to meet the needs of applications. Cellular mobile communication technology is in the evolution stage of new generation technology. An important feature of the new generation technology is to support the flexible configuration of multiple business types. Because different service types have different requirements for wireless communication technology, for example, the main requirements of enhanced mobile broadband (eMBB) service types focus on large bandwidth and high speed; the main requirements of ultra-reliable and low latency communications (URLLC) service types focus on higher reliability and low latency; the main requirement of the massive machine type communication (mMTC) service type focuses on the large number of connections. Therefore, the new generation of wireless communication systems require flexible and configurable designs to support the transmission of multiple service types.

In the research of wireless communication technology, satellite communication is considered to be an important aspect of the future development of wireless communication technology. Satellite communication refers to communication performed by radio communication equipment on the ground using satellites as relays. The satellite communication system consists of a satellite part and a ground part. The characteristics of satellite communication are: large communication range; as long as it is within the range covered by the radio waves emitted by the satellite, communication may be carried out from any two points; less susceptible to land disasters (high reliability). As a supplement to the current terrestrial cellular communication system, the satellite communication may have the following advantages: extended coverage: for areas that the current cellular communication system may not cover or have high coverage costs, such as oceans, deserts, remote mountainous areas, etc., the satellite communication may be used to solve communication problems; emergency communication: in extreme situations such as disasters such as earthquakes, where cellular communication infrastructure is unavailable, the satellite communication may be used to quickly establish communication connections; providing industry applications: for example, for delay-sensitive services for long-distance transmission, the satellite communication may be used to reduce the delay of service transmission. It is foreseeable that in the future wireless communication system, satellite communication system and land-based cellular communication system will gradually achieve deep integration and truly realize the intelligent connectivity of everything.

In some embodiments, in a satellite communication scenario, since there is a long signal transmission distance between a sending end and a receiving end, data transmission takes a long time. For a transmission with uplink and downlink relationship, it is determined that the terminal needs to compensate the propagation delay according to the configuration of the base station. Compensated propagation delay may be applied under various operations, such as a physical uplink shared channel (PUSCH) transmission scheduled by downlink control information (DCI); a transmission of hybrid automatic repeat reQuest (HARQ) feedback information and a transmission of media access control control element (MAC CE) and the like. Please refer to FIG. 1b, which shows the scenario where uplink and downlink timings are aligned on the base station side; please refer to FIG. 1c, which shows the scenario where uplink and downlink timings are not aligned on the base station side.

In some embodiments, the terminal needs to obtain position information to determine timing compensation information for an uplink transmission. The terminal may determine its own position information through a GNSS measurement module. For an IoT terminal, a cellular module and a GNSS module may not be supported to work simultaneously, and only a sporadic transmission may be supported.

In some embodiments, after the terminal obtains the GNSS measurement result, the available time of the GNSS may be reported to the base station through a GNSS validity duration. In some embodiments, the terminal enters an idle state after the GNSS validity duration of the terminal has expired. The act of the terminal entering the idle state to re-obtain GNSS may introduce unnecessary delay. The base station may trigger the terminal to perform GNSS measurement in a connected state, preventing the terminal from entering the idle state. However, how the terminal and the base station have a consistent understanding of the GNSS measurement success state needs to be studied.

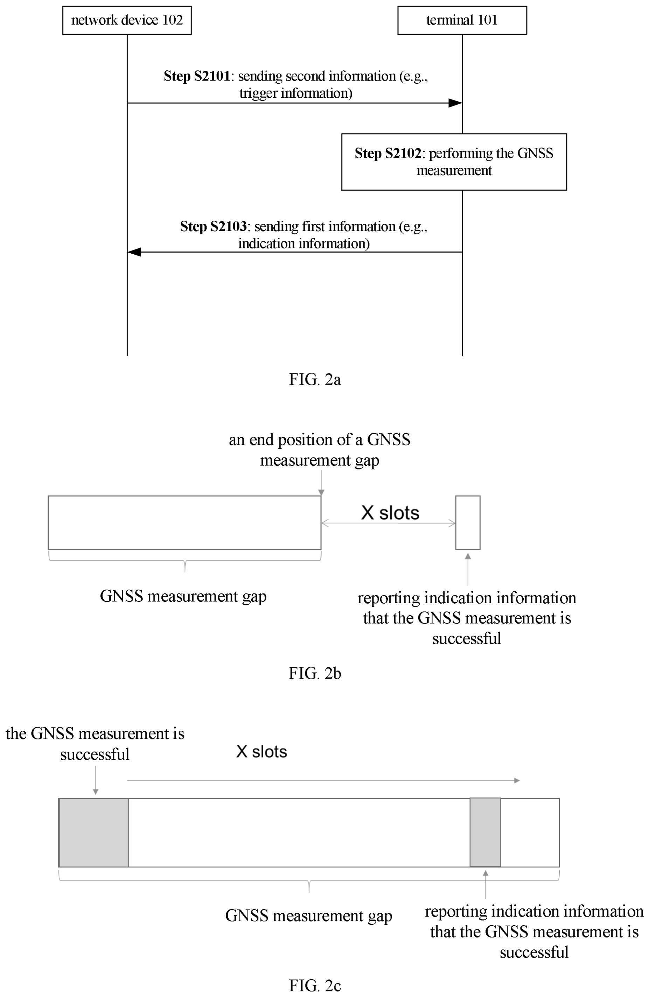

FIG. 2a is an interactive schematic diagram illustrating an information indication method according to embodiments of the present disclosure. As shown in FIG. 2a, the information indication method related to embodiments of the present disclosure is used in an information indication system 100, and the above method includes:
In step 2101, a network device sends second information to a terminal.

In some embodiments, the terminal receives the second information sent by the network device.

In some embodiments, the second information is used to trigger the terminal to perform a GNSS measurement.

In some embodiments, the second information is used to trigger the terminal to perform the GNSS measurement within a GNSS measurement gap.

In some embodiments, the network device sends the second information via a trigger instruction.

In some embodiments, the second information is trigger information.

In some embodiments, the network device sends the second information via an MAC CE.

In some embodiments, the network device sends the second information via a radio resource control (RRC) signaling.

In some embodiments, the network device sends the second information via a DCI signaling.

In step 2102, the terminal performs the GNSS measurement.

In some embodiments, in response to receiving the second information, the terminal performs the GNSS measurement.

In some embodiments, in response to receiving the second information, the GNSS measurement is performed within the GNSS measurement gap to obtain a measurement result.

In some embodiments, the terminal determines the GNSS measurement gap according to third information.

In some embodiments, the third information may be sent by the network device.

In some embodiments, the third information is configuration information.

In some embodiments, the third information is predefined or preconfigured information.

In some embodiments, the GNSS measurement gap may include a start time and a length.

In some embodiments, the GNSS measurement gap may include the start time and an end time.

In some embodiments, the GNSS measurement gap may include the length and the end time.

In some embodiments, the length of the GNSS measurement gap may be determined according to period information reported by the terminal to the network device.

In some embodiments, a position of the start time of the GNSS measurement gap is an end position of a GNSS validity duration.

In some embodiments, the position of the start time of the GNSS measurement gap is a position spaced from the end position of the GNSS validity duration by a first offset.

In some embodiments, the position of the start time of the GNSS measurement gap may be a time domain position spaced from a HARQ feedback position of the terminal by X slots. In some embodiments, one of the following is included:
a start position of the GNSS measurement gap being the end position of the GNSS validity duration;
a start position of the GNSS measurement gap being the time domain position spaced from the end position of the GNSS validity duration by the first offset;
a start position of the GNSS measurement gap being the time domain position spaced from the HARQ feedback position of the terminal by the second offset; or
a start position of the GNSS measurement gap being determined according to fourth information received.

In some embodiments, the fourth information may be sent by the network device. In some embodiments, the first offset may be the same as the second offset or the first offset may be different from the second offset.

In step 2103, the terminal sends the first information to the network device.

In some embodiments, the network device receives the first information sent by the terminal.

In some embodiments, the first information is indication information.

In some embodiments, the first information indicates the measurement result of the GNSS measurement performed by the terminal within the GNSS measurement gap, and the measurement result includes whether the GNSS measurement is successful or failed.

In some embodiments, in response to the terminal determining that the GNSS measurement is successful within the GNSS measurement gap, the terminal sends the first information to the network device.

In some embodiments, the first information indicates whether the terminal succeeds or fails in performing the GNSS measurement.

In some embodiments, the first information indicates a GNSS position fix time duration.

In some embodiments, in response to the first information indicating a first value, it indicates that the terminal succeeds in performing the GNSS measurement. For example, the first value is "1".

In some embodiments, in response to the first information indicating a second value, it indicates that the terminal fails in performing the GNSS measurement. For example, the second value is "0".

In some embodiments, in response to completing the GNSS measurement, the terminal sends the first information.

In some embodiments, the terminal sends the first information in response to determining that a GNSS available time is the same as a most recently reported GNSS available time.

In some embodiments, the terminal sends the first information in response to determining that a deviation between the GNSS available time and the most recently reported GNSS available time is less than a first threshold.

In some embodiments, in a case where the first information carries a first identifier, the first information indicates that the GNSS measurement is successful.

In some embodiments, in a case where the first information carries a second identifier, the first information indicates that the GNSS measurement is failed.

In some embodiments, in a case where the first information carries a GNSS available time, the first information indicates that the GNSS measurement is successful.

In some embodiments, in a case where the first information does not carry the GNSS available time, the first information indicates that the GNSS measurement is failed.

In some embodiments, in a case where a duration of a GNSS available time carried by the first information is less than a second threshold, the first information indicates that the GNSS measurement is failed.

In some embodiments, in a case where a deviation between the GNSS available time and the most recently reported GNSS available time is greater than the first threshold, the first information carries the GNSS available time.

In some embodiments, the GNSS available time is a remaining GNSS available time.

In some embodiments, the terminal determines fifth information, in which the fifth information is used for the terminal to determine a sending time for sending the first information.

In some embodiments, the fifth information is the configuration information.

In some embodiments, the terminal sends the first information according to the fifth information.

In some embodiments, the terminal determines the fifth information according to the information received from the network device.

In some embodiments, the terminal determines the fifth information according to the information pre-configured or predefined.

In some embodiments, the sending time is a time of the terminal spaced from the end position of the GNSS measurement gap by a first duration.

In some embodiments, the first duration (e.g., X) may be predefined or preconfigured.

In some embodiments, a unit of the first duration may be a logical unit of time, such as a subframe or a slot.

In some embodiments, the first duration may be an absolute unit of time, for example, milliseconds.

In some embodiments, as shown in FIG. 2b, the terminal sends the first information (corresponding to indication information reporting that the GNSS measurement is successful in the figure) on a time domain resource spaced from the end position of the GNSS measurement gap by X slots.

In some embodiments, the first duration may be indicated in the MAC CE that triggers the GNSS measurement.

In some embodiments, the first duration may be indicated in an RRC message, an MAC CE message or a DCI message sent by the network device and received by the terminal.

In some embodiments, the terminal sends the first information within a first time period after successfully performing the GNSS measurement.

In some embodiments, as shown in FIG. 2c, the terminal successfully performs the GNSS measurement within the GNSS measurement gap, and the terminal needs to report the first information within the X slots, and the terminal selects an appropriate reporting opportunity within the X slots according to the implementation.

In some embodiments, the terminal may transmit the first information via an uplink data channel or an uplink control channel.

In some embodiments, the terminal may send the first information via a PRACH.

In some embodiments, a first set is set, in which the first set includes at least one preamble; the PRACH is sent by using the preamble in the first set, in which the first information indicates that the GNSS measurement is successful.

In some embodiments, a sequence set (or the first set) of the preamble is predefined, and the first information indicates that the GNSS measurement is successful in a case where the terminal uses the preamble in the sequence set of the preamble to send on the PRACH.

In some embodiments, the second information, the third information, and the fourth information may be carried in the same signaling or in different signaling.

In some embodiments, the term "information" may be used interchangeably with terms such as "message", "signal", "signaling", "report", "configuration", "indication", "instruction", "command", "channel", "parameter", "field", and "data".

In some embodiments, the term "sending" may be used interchangeably with terms such as "emitting", "reporting" and "transmitting".

The information indication method according to embodiments of the present disclosure may include at least one of step S2101 to step S2103. For example, step S2101 may be implemented as an independent embodiment, step S2102 may be implemented as an independent embodiment, and step S2103 may be implemented as an independent embodiment. For example, step S2102 combined with step S2103 may be implemented as an independent embodiment, and step S2101 combined with step S2103 may be implemented as an independent embodiment, which is not limited in the present disclosure.

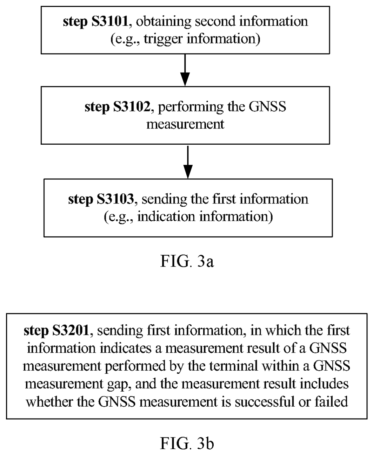

FIG. 3a is a flow chart illustrating an information indication method according to embodiments of the present disclosure. As shown in FIG. 3a, embodiments of the present disclosure relates to the information indication method, which is performed by a terminal, and the method includes:
In step S3101, second information is obtained.

In some embodiments, the terminal receives the second information sent by an access network device.

In some embodiments, the terminal obtains the second information specified by a protocol.

In some embodiments, the terminal obtains the second information from an upper layer(s).

In some embodiments, the terminal performs processing to obtain the second information.

In some embodiments, step S3101 is omitted, and the terminal autonomously implements the function indicated by the second information, or the above function is default or preset.

Regarding an optional implementation of step S3101, reference may be made to the optional implementation of step S2101 in FIG. 2a and other related parts of the embodiment involved in FIG. 2a, which is not repeated here.

In some embodiments, the terminal may further receive second information sent by other subjects other than the network device.

In step S3102, the GNSS measurement is performed.

Regarding an optional implementation of step S3102, reference may be made to the optional implementation of step S3102 in FIG. 2a and other related parts of the embodiment involved in FIG. 2a, which is not repeated here.

In step S3103, the first information is sent.

Regarding an optional implementation of step S3103, reference may be made to the optional implementation of step S2103 in FIG. 2a and other related parts of the embodiment involved in FIG. 2a, which is not repeated here.

In some embodiments, the terminal may further send the first information to other subjects other than the network device.

The information indication method according to embodiments of the present disclosure may include at least one of step S2101 to step S2103. For example, step S2101 may be implemented as an independent embodiment, step S2102 may be implemented as an independent embodiment, and step S2103 may be implemented as an independent embodiment. For example, step S2102 combined with step S2103 may be implemented as an independent embodiment, and step S2101 combined with step S2103 may be implemented as an independent embodiment, which is not limited in the present disclosure.

FIG. 3b is a flow chart illustrating an information indication method according to embodiments of the present disclosure. As shown in FIG. 3b, embodiments of the present disclosure relates to the information indication method, which is performed by a terminal, and the method includes:

In step S3201, first information is sent,
in which the first information indicates a measurement result of a GNSS measurement performed by the terminal within a GNSS measurement gap, and the measurement result includes whether the GNSS measurement is successful or failed.

Regarding an optional implementation of step S3201, reference may be made to the optional implementation of step S2102 in FIG. 2a and other related parts of the embodiment involved in FIG. 2a, which is not repeated here.

In some embodiments, the method further includes:
receiving second information; and
in a case where the second information is received, obtaining the measurement result by performing the GNSS measurement within the GNSS measurement gap.

In some embodiments, the method further includes at least one of:
determining the GNSS measurement gap according to third information received; or
determining the GNSS measurement gap according to third information predefined or preconfigured.

In some embodiments, one of the following is included:
a start position of the GNSS measurement gap being an end position of a GNSS validity duration;
a start position of the GNSS measurement gap being a time domain position spaced from an end position of a GNSS validity duration by a first offset;
a start position of the GNSS measurement gap being a time domain position spaced from a HARQ feedback position of the terminal by a second offset; or
a start position of the GNSS measurement gap being determined according to fourth information received.

In some embodiments, sending the first information includes at least one of:
in a case where the GNSS measurement is complete, sending the first information;
in a case where a GNSS available time is the same as a most recently reported GNSS available time, sending the first information; or
in a case where a deviation between a GNSS available time and a most recently reported GNSS available time is less than a first threshold, sending the first information.

In some embodiments, at least one of the following is included:
in a case where the first information carries a first identifier, the first information indicating that the GNSS measurement is successful;
in a case where the first information carries a second identifier, the first information indicating that the GNSS measurement is failed;
in a case where the first information carries a GNSS available time, the first information indicating that the GNSS measurement is successful;
in a case where the first information does not carry a GNSS available time, the first information indicating that the GNSS measurement is failed; or
in a case where a duration of a GNSS available time carried by the first information is less than a second threshold, the first information indicating that the GNSS measurement is failed.

In some embodiments, in a case where a deviation between a GNSS available time and a most recently reported GNSS available time is greater than a first threshold, the first information carries the GNSS available time.

In some embodiments, the GNSS available time is a remaining GNSS available time.

In some embodiments, the method further includes:
determining fifth information, in which the fifth information is used for the terminal to determine a sending time for sending the first information; and
sending the first information includes:
   sending the first information according to the fifth information.

In some embodiments, the fifth information is predefined or preconfigured.

In some embodiments, the sending time is a time of the terminal spaced from an end position of the GNSS measurement gap by a first duration.

In some embodiments, the sending time is a time within a first time period after the terminal successfully performs the GNSS measurement.

In some embodiments, sending the first information includes one of:
sending the first information via an uplink data channel; or
sending the first information via an uplink control channel.

In some embodiments, the uplink control channel is a PRACH, and the method further includes:
setting a first set, in which the first set includes at least one preamble; and
sending the PRACH by using the preamble in the first set, in which the first information indicates that the GNSS measurement is successful.

The above embodiments may be implemented separately or in combination with each other. Regarding an optional implementation, reference may be made to the optional implementation in steps of FIG. 2a, which is not repeated here.

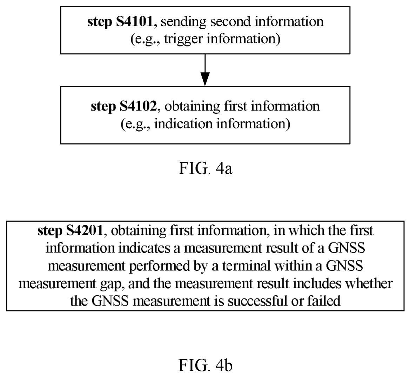

FIG. 4a is a flow chart illustrating an information indication method according to embodiments of the present disclosure. As shown in FIG. 4a, embodiments of the present disclosure relates to the information indication method, which is performed by a network device, and the method includes:
In step S4101, second information is sent.

Regarding an optional implementation of step S4101, reference may be made to the optional implementation of step S2101 in FIG. 2a and other related parts of the embodiment involved in FIG. 2a, which is not repeated here.

In step S4102, first information is obtained.

In some embodiments, the network device receives the first information sent by a terminal.

In some embodiments, the network device obtains the first information specified by a protocol.

In some embodiments, the network device obtains the first information from an upper layer(s).

In some embodiments, the network device performs processing to obtain the first information.

In some embodiments, step S4102 is omitted, and the terminal autonomously implements the function indicated by the first information, or the above function is default or preset.

Regarding an optional implementation of step S4102, reference may be made to the optional implementation of step S2103 in FIG. 2a and other related parts of the embodiment involved in FIG. 2a, which is not repeated here.

In some embodiments, the network device may further receive the first information sent by other subjects other than the terminal.

The information indication method according to embodiments of the present disclosure may include at least one of step S4101 to step S4102. For example, step S4101 may be implemented as an independent embodiment, and step S4102 may be implemented as an independent embodiment.

FIG. 4b is a flow chart illustrating an information indication method according to embodiments of the present disclosure. As shown in FIG. 4b, embodiments of the present disclosure relates to the information indication method, which is performed by a network device, and the method includes:

In step S4201, first information is obtained,
in which the first information indicates a measurement result of a GNSS measurement performed by a terminal within a GNSS measurement gap, and the measurement result includes whether the GNSS measurement is successful or failed.

Regarding an optional implementation of step S4201, reference may be made to the optional implementation of step S2103 in FIG. 2a and other related parts of the embodiment involved in FIG. 2a, which is not repeated here.

In some embodiments, the network device receives the first information sent by a terminal.

In some embodiments, the network device obtains the first information specified by a protocol.

In some embodiments, the network device obtains the first information from an upper layer(s).

In some embodiments, the network device performs processing to obtain the first information.

In some embodiments, step S4101 is omitted, and the terminal autonomously implements the function indicated by the first information, or the above function is default or preset.

In some embodiments, the method further includes:
sending second information, in which the second information is used to trigger the terminal to perform the GNSS measurement within the GNSS measurement gap.

In some embodiments, one of the following is included:
a start position of the GNSS measurement gap being an end position of a GNSS validity duration;
a start position of the GNSS measurement gap being a time domain position spaced from an end position of a GNSS validity duration by a first offset;
a start position of the GNSS measurement gap being a time domain position spaced from a HARQ feedback position of the terminal by a second offset; or
a start position of the GNSS measurement gap being determined according to fourth information received.

In some embodiments, at least one of the following is included:
in a case where the first information carries a first identifier, the first information indicating that the GNSS measurement is successful;
in a case where the first information carries a second identifier, the first information indicating that the GNSS measurement is failed;
in a case where the first information carries a GNSS available time, the first information indicating that the GNSS measurement is successful;
in a case where the first information does not carry a GNSS available time, the first information indicating that the GNSS measurement is failed; or
in a case where a duration of a GNSS available time carried by the first information is less than a second threshold, the first information indicating that the GNSS measurement is failed.

In some embodiments, in a case where a deviation between a GNSS available time and a most recently reported GNSS available time is greater than a first threshold, the first information carries the GNSS available time.

In some embodiments, the GNSS available time is a remaining GNSS available time.

In some embodiments, a sending time of the first information is a time of the terminal spaced from an end position of the GNSS measurement gap by a first duration.

In some embodiments, the sending time of the first information is a time within a first time period after the terminal successfully performs the GNSS measurement.

In some embodiments, receiving the first information includes one of:
receiving the first information via an uplink data channel; or
receiving the first information via an uplink control channel.

In some embodiments, the uplink control channel is a PRACH, and the method further includes:
receiving the PRACH sent by the terminal using a preamble in a first set,
in which the first set includes at least one preamble, and the first information indicates that the GNSS measurement is successful.

The above embodiments may be implemented separately or in combination with each other. Regarding an optional implementation, reference may be made to the optional implementation of steps in FIG. 2a, which is not repeated here.

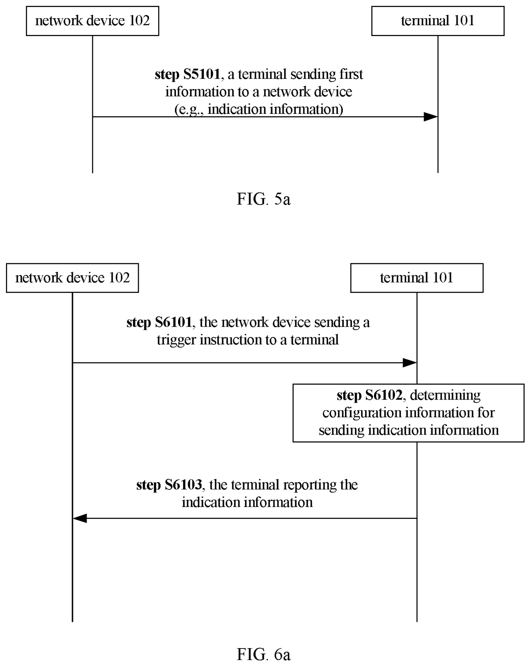

As shown in FIG. 5a, embodiments of the present disclosure relates to an information indication method, which is applied to a communication system 100, and the method includes:

In step S5101, a terminal sends first information to a network device.

In some embodiments, the first information indicates a measurement result of a GNSS measurement performed by the terminal within a GNSS measurement gap, and the measurement result includes whether the GNSS measurement is successful or failed.

Regarding an optional implementation of step S5101, reference may be made to the optional implementation of steps in FIG. 2a and other related parts of the embodiment involved in FIG. 2a, which is not repeated here.

In some embodiments, the above methods may include the methods described in embodiments of an information indication system, the terminal, the network device and the like, which is not repeated here.

FIG. 6a is an interactive schematic diagram illustrating an information indication method according to embodiments of the present disclosure. As shown in FIG. 6a, embodiments of the present disclosure relates to the information indication method, which includes:
In step S6101, the network device sends a trigger instruction to a terminal.

In some embodiments, the terminal receives the trigger instruction from a base station (corresponding to second information of the present disclosure) and performs a GNSS measurement within a measurement gap, in which the trigger instruction is an MAC CE, and the terminal determines a configuration of the measurement gap according to an indication of configuration information or a predefined method.

For example, a length of the measurement gap may be pre-configured for the terminal or determined by the terminal according to a pre-defined method (such as according to information reported by the terminal). Start position information of a GNSS measurement gap may further be predefined or pre-configured. For example, a start position of the GNSS measurement gap is an end position of a GNSS validity duration or a time domain position spaced from a HARQ feedback position of the terminal by X slots.

In step S6102, configuration information for sending indication information is determined.

In an implementation method, the terminal receives a GNSS reporting time determined according to a predefined or pre-configured method. A time interval X is determined, and the terminal reports indication information that the GNSS measurement is successful at a time domain position spaced from a time domain position where the GNSS measurement gap ends by the time interval X. The X may be predefined or pre-configured, and a unit of X may be a logical unit of time (e.g. subframe, slot, etc.) or an absolute unit of time (e.g. ms). As shown in the following figure: the terminal sends the indication information that the GNSS measurement is successful at a time domain position spaced from a time domain position where the GNSS measurement gap ends by X slots. The X may be indicated in the MAC CE that triggers the GNSS measurement, or may be indicated in other RRC, MAC CE or DCI received by the terminal and sent by the base station.

In some embodiments, the terminal sends the indication information that the GNSS measurement is successful within a predefined time after successfully performing the GNSS measurement. For example, in a case where the terminal successfully performs the GNSS measurement in the GNSS measurement gap, the terminal needs to report the indication information that the GNSS measurement is successful in the X slot, and the terminal selects an appropriate reporting opportunity in the X slot to report the indication information that the GNSS measurement is successful.

In some embodiments, the terminal may transmit the indication information that the GNSS measurement is successful via an uplink data channel or an uplink control channel.

In some embodiments, the terminal may send the indication information of the GNSS measurement via the PRACH. In this method, a sequence set of preamble may be predefined. In a case where the terminal uses the sequence set of preamble to send on the PRACH, the base station determines that the preamble is the indication information for indicating that the GNSS measurement is successful.

In step S6103, the terminal reports the indication information.

In some embodiments, the terminal determines that the GNSS measurement is successful in the GNSS measurement gap, and the terminal reports the indication information that the GNSS measurement is successful (corresponding to the first information in the present disclosure), and further may carry the indication information of a GNSS position fix time duration.

In some embodiments, a success indication is a type of indication information, and different states indicate whether the GNSS measurement is successful or failed. For example, the indication information is a 1 bit indication information, and "1" represents that the GNSS measurement is successful; "0" represents that the GNSS measurement is failed.

In some embodiments, the indication information is indication information of a GNSS available time. When the terminal does not report this information, or the terminal determines that reported available time information is less than a predefined length X, the base station determines that the terminal fails in performing the GNSS measurement.

In some embodiments, in a case where the GNSS available time determined by the terminal is unchanged from a most recently reported GNSS available time or a deviation between them is less than a predefined range, the indication information is reported.

In some embodiments, in a case where the deviation between the GNSS available time and the most recently reported GNSS available time is greater than the predefined range, the terminal reports the indication information of the GNSS available time.

In embodiments of the present disclosure, some or all of the steps and their optional implementations may be arbitrarily combined with some or all of the steps in other embodiments, and may also be arbitrarily combined with optional implementations in other embodiments.

Embodiments of the present disclosure also provide a device for implementing any of the above methods, for example, a device including units or modules for implementing the steps performed by the terminal in any of the above methods. For another example, another device is also provided, which includes units or modules for implementing the steps performed by the network device (such as an access network device, a core network function node, a core network device and the like) in any of the above methods.

It should be understood that the division of each unit or module in the above device is only a division of logical functions, which may be fully or partially integrated into a physical entity or physically separated in actual implementation. Moreover, the units or modules in the device may be implemented in a form of calling software by a processor: for example, the device includes a processor, which is connected with a memory, and instructions are stored in the memory, and the processor calls the instructions stored in the memory to implement any of the above methods or implement the functions of the units or modules of the device, in which the processor is a general-purpose processor, such as a central processing unit (CPU) or a microprocessor, and the memory is a memory in the device or a memory outside the device. Alternatively, the units or modules in the device may be implemented in a form of hardware circuits, and some or all of the functions of the units or modules may be implemented by designing the hardware circuits, which may be understood as one or more processors; for example, in an implementation, the above-mentioned hardware circuit is an application-specific integrated circuit (ASIC), and some or all of the functions of the above-mentioned units or modules are implemented by designing the logical relationship of elements in the circuit; for another example, in another implementation, the above hardware circuit may be implemented by a programmable logic device (PLD). Take a field programmable gate array (FPGA) as an example, it may include a large number of logic gates, and the connection relationship between the logic gates is configured by configuration files, implementing the functions of some or all of the above units or modules. All the units or modules of the above device may be implemented entirely in the form of calling software by the processor, or entirely in the form of hardware circuits, or partially in the form of calling software by a processor, and the rest is implemented in the form of hardware circuits.

In embodiments of the present disclosure, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP). In another implementation, the processor may realize certain functions through the logical relationship of hardware circuits, which are fixed or reconfigurable. For example, the processor is a hardware circuit implemented by an application-specific integrated circuit (ASIC) or a programmable logic device (PLD), such as an FPGA. In the reconfigurable hardware circuit, the process that the processor loads the configuration document to implement the hardware circuit configuration may be understood as the process that the processor loads instructions to implement the functions of some or all of the above units or modules. Furthermore, it may also be a hardware circuit designed for artificial intelligence, which may be understood as the ASIC, such as neural network processing unit (NPU), tensor processing unit (TPU), deep learning processing unit (DPU) and so on.

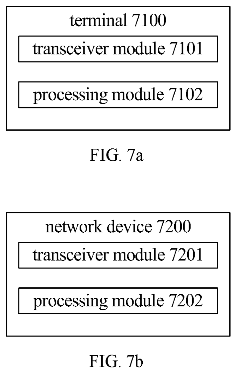

FIG. 7a is a block diagram illustrating a terminal according to embodiments of the present disclosure. As shown in FIG. 7a, a terminal 7100 may include at least one of a transceiver module 7101 or a processing module 7102. In some embodiments, the transceiver module is configured to receive first information. Optionally, the above transceiver module is configured to perform at least one of the communication steps (such as step S2101 and step S2103, but not limited to this) performed by the terminal 101 in any of the above methods, which is not repeated here. Optionally, the above processing module is configured to perform at least one of other steps (such as step S2102, but not limited to this) performed by the terminal 101 in any of the above methods, which is not repeated here.

FIG. 7b is a block diagram illustrating a network device according to embodiments of the present disclosure. As shown in FIG. 7b, a network device 7200 may include at least one of a transceiver module 7201 or a processing module 7202. In some embodiments, the transceiver module is configured to send first information. Optionally, the above transceiver module is configured to perform at least one of the communication steps (such as step S2101 and step S3103, but not limited to this) performed by the terminal 101 in any of the above methods, which is not repeated here. In some embodiments, the transceiver module may include a sending module and/or a receiving module, which may be separate or integrated. Optionally, the transceiver module may be replaced with the transceiver.

In some embodiments, the processing module may be one module or include multiple sub-modules. Optionally, the plurality of sub-modules respectively perform all or part of the steps required by the processing module. Optionally, the processing module may be replaced with the processor.

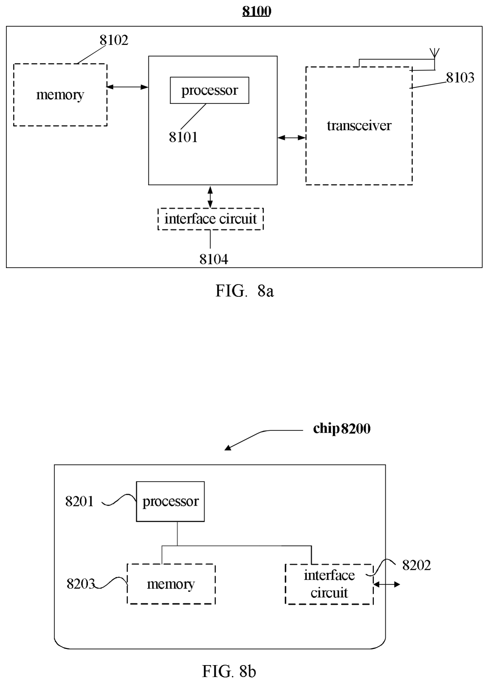

FIG. 8a is a block diagram illustrating a communication device 8100 according to embodiments of the present disclosure. The communication device 8100 may be a network device (e.g., an access network device, a core network device, etc.), or may be a terminal (e.g., a user equipment, etc.), or may be a chip, a chip system, or a processor supporting the network device to implement any of the above methods, or may be a chip, a chip system, or a processor supporting the terminal to implement any of the above methods. The communication device 8100 may be used to implement the method described in the above-mentioned method embodiments, for details, reference may be made to the description in the above-mentioned method embodiments.

As shown in FIG. 8a, the communication device 8100 includes one or more processors 8101. The processor 8101 may be a general-purpose processor or a special-purpose processor, for example, a baseband processor or a central processing unit. The baseband processor may be used to process communication protocols and communication data, and the central processor may be used to control communication devices (such as a base station, a baseband chip, a terminal, a terminal chips, a DU or a CU, etc.), execute programs, and process program data. The communication device 8100 is used to perform any of the above methods.

In some embodiments, the communication device 8100 further includes one or more memories 8102 for storing instructions. Optionally, all or part of the memory 8102 may be located outside the communication device 8100.

In some embodiments, the communication device 8100 further includes one or more transceivers 8103. In a case where the communication device 8100 includes one or more transceivers 8103, the transceiver 8103 performs at least one of the communication steps (such as step S2101 and step S2103, but not limited to this) in the above method, and the processor 8101 performs at least one of other steps (such as step S2102, but not limited to this).

In some embodiments, the transceiver may include a receiver and/or a transmitter, which may be separate or integrated. Optionally, the terms such as transceiver, transceiver unit, transceiving machine, transceiver circuit, etc. may be replaced with each other, and the terms such as transmitter, transmitting unit, transmitting machine, transmitting circuit and the like may be replaced with each other, and the terms such as receiver, receiving unit, receiving machine, receiving circuit and the like may be replaced with each other.

In some embodiments, the communication device 8100 may include one or more interface circuits 8104. Optionally, the interface circuit 8104 is connected to the memory 8102. The interface circuit 8104 may be used to receive signals from the memory 8102 or other devices, and may be used to send signals to the memory 8102 or other devices. For example, the interface circuit 8104 may read instructions stored in the memory 8102 and send the instructions to the processor 8101.

The communication device 8100 described in the above embodiments may be a network device or a terminal device, but the scope of the communication device 8100 described in the present disclosure is not limited thereto. The structure of the communication device may not be limited by FIG. 8a. The communication device may be a stand-alone device or may be part of a larger device. For example, the communication device may be: 1) a stand-alone integrated circuit (IC), or a chip, or a chip system or subsystem; 2) a set of one or more ICs, in which optionally, the set of ICs may also include a storage component for storing data and programs; 3) an ASIC, such as a modem; 4) a module that may be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others.

FIG. 8b is a block diagram illustrating a chip 8200 according to embodiments of the present disclosure. In a case where the communication device 8100 may be a chip or a chip system, please refer to the block diagram of the chip 8200 shown in FIG. 8b, but it is not limited to this.

The chip 8200 includes one or more processors 8201, and the chip 8200 is used to perform any of the above methods.

In some embodiments, the chip 8200 also includes one or more interface circuits 8202. Optionally, the interface circuit 8202 is connected to the memory 8203. The interface circuit 8202 may be used to receive signals from the memory 8203 or other devices, and the interface circuit 8202 may be used to send signals to the memory 8203 or other devices. For example, the interface circuit 8202 may read instructions stored in the memory 8203 and send the instructions to the processor 8201.

In some embodiments, the interface circuit 8202 performs at least one of the communication steps (such as step S2101 and step S2103, but not limited to this) in the above method, and the processor 8201 performs at least one of other steps (such as step S2102, but not limited to this).

In some embodiments, the terms such as interface circuit, interface, transceiver pin, transceiver and the like may be replaced with each other.

In some embodiments, the chip 8200 further includes one or more memories 8203 for storing instructions. Optionally, all or part of the memory 8203 may be outside the chip 8200.

The present disclosure further proposes a storage medium on which instructions are stored, which, when executed on the communication device 8100, cause the communication device 8100 to perform any of the above methods. Optionally, the storage medium is an electronic storage medium. Optionally, the storage medium is a computer-readable storage medium, but it is not limited to this, and it may also be a storage medium readable by other devices. Optionally, the storage medium may be a non-transitory storage medium, but it is not limited to this, and it may also be a temporary storage medium.

The present disclosure further proposes a program product which, when executed by the communication device 8100, causes the communication device 8100 to perform any of the above methods. Optionally, the program product is a computer program product.

The present disclosure further proposes a computer program that, when run on a computer, causes the computer to perform any of the above methods.

## Claims

1. An information indication method, comprising:
sending first information,
wherein the first information indicates a measurement result of a global navigation satellite system (GNSS) measurement performed by a terminal within a GNSS measurement gap, and the measurement result comprises whether the GNSS measurement is successful or failed.

2. The method according to claim 1, further comprising:
receiving second information; and
in a case where the second information is received, obtaining the measurement result by performing the GNSS measurement within the GNSS measurement gap.

3. The method according to claim 1, further comprising at least one of:
determining the GNSS measurement gap according to third information received; or
determining the GNSS measurement gap according to third information predefined or preconfigured.

4. The method according to claim 3, comprising one of:
a start position of the GNSS measurement gap being an end position of a GNSS validity duration;
a start position of the GNSS measurement gap being a time domain position spaced from an end position of a GNSS validity duration by a first offset;
a start position of the GNSS measurement gap being a time domain position spaced from a hybrid automatic repeat request (HARQ) feedback position of the terminal by a second offset; or
a start position of the GNSS measurement gap being determined according to fourth information received.

5. The method according to claim 1, wherein sending the first information comprises at least one of:
in a case where the GNSS measurement is complete, sending the first information;
in a case where a GNSS available time is the same as a most recently reported GNSS available time, sending the first information; or
in a case where a deviation between a GNSS available time and a most recently reported GNSS available time is less than a first threshold, sending the first information.

6. The method according to claim 1, comprising at least one of:
in a case where the first information carries a first identifier, the first information indicating that the GNSS measurement is successful;
in a case where the first information carries a second identifier, the first information indicating that the GNSS measurement is failed;
in a case where the first information carries a GNSS available time, the first information indicating that the GNSS measurement is successful;
in a case where the first information does not carry a GNSS available time, the first information indicating that the GNSS measurement is failed; or
in a case where a duration of a GNSS available time carried by the first information is less than a second threshold, the first information indicating that the GNSS measurement is failed.

7. The method according to claim 6, wherein in a case where a deviation between a GNSS available time and a most recently reported GNSS available time is greater than a first threshold, the first information carries the GNSS available time.

8. The method according to claim 7, wherein the GNSS available time is a remaining GNSS available time.

9. The method according to claim 1, further comprising:
determining fifth information, wherein the fifth information is used for the terminal to determine a sending time for sending the first information; and
sending the first information comprises:
sending the first information according to the fifth information.

10. The method according to claim 9, wherein the fifth information is predefined or preconfigured.

11. The method according to claim 10, wherein the sending time is a time of the terminal spaced from an end position of the GNSS measurement gap by a first duration.

12. The method according to claim 10, wherein the sending time is a time within a first time period after the terminal successfully performs the GNSS measurement.

13. The method according to claim 1, wherein sending the first information comprises one of:
sending the first information via an uplink data channel; or
sending the first information via an uplink control channel.

14. The method according to claim 13, wherein the uplink control channel is a physical random access channel (PRACH), and the method further comprises:
setting a first set, wherein the first set comprises at least one preamble; and
sending the PRACH by using the preamble in the first set, wherein the first information indicates that the GNSS measurement is successful.

15. An information indication method, comprising:
receiving first information,
wherein the first information indicates a measurement result of a global navigation satellite system (GNSS) measurement performed by a terminal within a GNSS measurement gap, and the measurement result comprises whether the GNSS measurement is successful or failed.

16. The method according to claim 15, further comprising:
sending second information, wherein the second information is used to trigger the terminal to perform the GNSS measurement within the GNSS measurement gap.

17. The method according to claim 15, comprising one of:
a start position of the GNSS measurement gap being an end position of a GNSS validity duration;
a start position of the GNSS measurement gap being a time domain position spaced from an end position of a GNSS validity duration by a first offset;
a start position of the GNSS measurement gap being a time domain position spaced from a hybrid automatic repeat request (HARQ) feedback position of the terminal by a second offset; or
a start position of the GNSS measurement gap being determined according to fourth information received.

18. The method according to claim 15, comprising at least one of:
in a case where the first information carries a first identifier, the first information indication that the GNSS measurement is successful;
in a case where the first information carries a second identifier, the first information indication that the GNSS measurement is failed;
in a case where the first information carries a GNSS available time, the first information indication that the GNSS measurement is successful;
in a case where the first information does not carry a GNSS available time, the first information indication that the GNSS measurement is failed; or
in a case where a duration of a GNSS available time carried by the first information is less than a second threshold, the first information indication that the GNSS measurement is failed.

19. The method according to claim 18, wherein in a case where a deviation between a GNSS available time and a most recently reported GNSS available time is greater than a first threshold, the first information carries the GNSS available time.

20. The method according to claim 9, wherein the GNSS available time is a remaining GNSS available time.

21. The method according to claim 15, wherein a sending time of the first information is a time of the terminal spaced from an end position of the GNSS measurement gap by a first duration.

22. The method according to claim 15, wherein a sending time of the first information is a time within a first time period after the terminal successfully performs the GNSS measurement.

23. The method according to claim 15, wherein receiving the first information comprises one of:
receiving the first information via an uplink data channel; or
receiving the first information via an uplink control channel.

24. The method according to claim 23, wherein the uplink control channel is a physical random access channel (PRACH), and the method further comprises:
receiving the PRACH sent by the terminal using a preamble in a first set, wherein the first set comprises at least one preamble, and the first information indicates that the GNSS measurement is successful.

25. An information indication method, applied to a communication system, comprising:
a terminal sending first information to a network device,
wherein the first information indicates a measurement result of a global navigation satellite system (GNSS) measurement performed by a terminal within a GNSS measurement gap, and the measurement result comprises whether the GNSS measurement is successful or failed.

26. A terminal, comprising:
a transceiver module configured to send first information,
wherein the first information indicates a measurement result of a global navigation satellite system (GNSS) measurement performed by a terminal within a GNSS measurement gap, and the measurement result comprises whether the GNSS measurement is successful or failed.

27. A network device, comprising:
a transceiver module configured to receive first information,
wherein the first information indicates a measurement result of a global navigation satellite system (GNSS) measurement performed by a terminal within a GNSS measurement gap, and the measurement result comprises whether the GNSS measurement is successful or failed.

28. An information indication system, comprising:
a terminal configured to implement the information indication method according to any one of claims 1 to 14; and
a network device configured to implement the information indication method according to any one of claims 15 to 23.

29. A terminal, comprising:
one or more processors,
wherein the terminal is configured to perform the information indication method according to any one of claims 1 to 14.

30. A network device, comprising:
one or more processors,
wherein the network device is configured to perform the information indication method according to any one of claims 15 to 24.

31. A storage medium storing instructions that, when executed on a communication device, cause the communication device to perform the information indication method according to any one of claims 1 to 14 and claims 15 to 24.
